# NEUE EUROPÄISCHE PATENTSCHRIFT

(11) **EP 2 741 572 B2**
(45) Veröffentlichungstag und Bekanntmachung des Hinweises auf die Entscheidung über den Einspruch: **20.08.2025**
(45) Hinweis auf die Patenterteilung: 04.09.2019
(21) Anmeldenummer: 13194681.6
(22) Anmeldetag: 27.11.2013
(51) Int. Cl.: H05B 6/12

(54) **Kochfeldvorrichtung**
Hotplate device
Dispositif de champ de cuisson

(30) Priorität: 04.12.2012 ES 201231888
(43) Veröffentlichungstag der Anmeldung: 11.06.2014
(73) Patentinhaber: BSH Hausgeräte GmbH, 81739 München (DE)
(72) Erfinder: Alegre Almale, Victoria, 50002 Zaragoza (ES); Carretero Chamarro, Claudio, 50003 Zaragoza (ES); Garde Aranda, Ignacio, 50012 Zaragoza (ES); Gracia Campos, Oscar, 50008 Zaragoza (ES); Lorente Perez, Alfonso, 50019 Zaragoza (ES); Palacios Tomas, Daniel, 50008 Zaragoza (ES)

(56) Entgegenhaltungen:
- EP-A1- 2 398 297
- EP-A1- 2 398 297
- EP-A2- 2 506 675
- EP-A2- 2 552 174
- EP-A2- 2 552 174
- EP-A2- 2 574 146
- EP-A2- 2 574 146
- EP-B1- 2 389 787
- WO-A1-2008/058614
- WO-A1-2008/058614
- WO-A1-2011/067708
- WO-A1-2011/107324
- WO-A2-2011/117041
- WO-A2-2011/117041
- DE-A1- 102012 205 100
- DE-A1- 19 538 719
- DE-A1- 19 708 335
- FR-A1- 2 984 463

## Beschreibung

Die Erfindung betrifft eine Kochfeldvorrichtung, welche nach Anspruch 1 als eine Induktionskochfeldvorrichtung ausgebildet ist.

Es ist bereits eine Kochfeldvorrichtung, insbesondere eine Induktionskochfeldvorrichtung, mit zumindest einem variablen Kochflächenbereich, der durch eine Anordnung von zumindest zwei länglichen Heizelementen festgelegt ist, vorgeschlagen worden. WO2011117041A2 und WO2008058614A1 zeigen eine solche Anordnung. Diese Dokumente offenbaren den Oberbegriff vom Anspruch 1. Die nachveröffentlichte EP2574146A2 offenbart eine Induktionsspule mit einer Außenkontur, welche eine angenäherte Trapezform aufweist, welche zwei gegenüberliegende und in etwa gleich lange Seiten und dazwischen zwei kurze Seiten, die jedoch unterschiedlich lang sind für die Trapezform, aufweist.

Die Aufgabe der Erfindung besteht insbesondere darin, eine gattungsgemäße Vorrichtung mit verbesserten Eigenschaften hinsichtlich eines Komforts und/oder einer preiswerten Ausgestaltung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, welche als eine Induktionskochfeldvorrichtung ausgebildet ist, mit zumindest einem variablen Kochflächenbereich, der durch eine Anordnung von zumindest zwei länglichen Heizelementen festgelegt ist.

Die Heizelemente bezüglich ihrer Längsachse versetzt angeordnet sind. Erfindungsgemäß sind die Heizelemente als Induktionsheizelemente ausgebildet. Unter einem "variablen Kochflächenbereich" soll ein Bereich zumindest einer Kochfläche verstanden werden, der dazu vorgesehen ist, zumindest eine an zumindest ein aufgestelltes Gargeschirr angepasste Kochzone zu bilden. Insbesondere unterscheidet sich der variable Kochflächenbereich von einer Kochfläche bei der Kochzonen, insbesondere durch Markierungen auf der Kochfläche, fest vorgegeben sind. Insbesondere ist der variable Kochflächenbereich von zumindest einer Heizelementmatrix gebildet. Vorteilhaft weist der variable Kochflächenbereich zumindest eine Sensoreinheit auf, die insbesondere von den Heizelementen selbst gebildet ist, die dazu vorgesehen ist, aufgestellte Gargeschirre insbesondere mittels Messung zumindest einer Induktivität und/oder zumindest einer Kapazität zu detektieren. Insbesondere ist der variable Kochflächenbereich dazu vorgesehen, einem detektierten Gargeschirr eine in Form, Größe und/oder Position angepasste Kochzone zuzuordnen. Insbesondere weist der variable Kochflächenbereich zumindest eine Steuereinheit auf, die dazu vorgesehen ist, Messwerte der Sensoreinheit auszuwerten, zumindest eine Kochzone zu berechnen und Heizelemente festzulegen, die diese Kochzone bilden. Unter einer "Heizelementmatrix" soll insbesondere eine, vorzugsweise zweidimensionale, vorteilhaft regelmäßige Anordnung, insbesondere in quadratischem oder hexagonalem Muster, von zumindest vier, insbesondere zumindest zehn, vorteilhaft zumindest zwanzig Induktionsheizelementen verstanden werden. Unter einem "länglichen" Heizelement soll ein Heizelement verstanden werden, das bei einer Betrachtung einer Projektion des Heizelements in eine Ebene zumindest eine Heizelementlängserstreckung aufweist, die größer ist als eine Heizelementquererstreckung. Insbesondere ist die Heizelementlängserstreckung um einen Faktor von mehr als 1,2, vorzugsweise um einen Faktor von mehr als 1,5 und insbesondere um einen Faktor von mehr als 1,8 größer als die Heizelementquererstreckung. Vorzugsweise ist die Heizelementlängserstreckung um einen Faktor von weniger als 3, vorzugsweise um einen Faktor von weniger als 2,5 und insbesondere um einen Faktor von weniger als 2,3 größer als die Heizelementquererstreckung. Unter einer "Elementlängserstreckung" zumindest eines Elements, insbesondere des Heizelements, soll insbesondere eine Erstreckung einer langen Seite eines kleinsten gedachten das Element umschließenden Rechtecks verstanden werden. Unter einer "Elementquererstreckung" zumindest eines Elements, insbesondere des Heizelements, soll insbesondere eine Erstreckung einer kurzen Seite eines kleinsten gedachten das Element umschließenden Rechtecks verstanden werden. Unter einem "Heizelement" soll ein Element verstanden werden, dass dazu vorgesehen ist, in zumindest einem Betriebszustand elektrische Energie an ein Gargeschirr, vorzugsweise durch zumindest eine Kochfeldplatte hindurch zu übertragen. Insbesondere ist das Heizelement dazu vorgesehen, in zumindest einem Betriebszustand, in dem das Heizelement an eine Versorgungselektronik angeschlossen ist, eine Leistung von zumindest 100 W, insbesondere zumindest 500 W, vorteilhaft zumindest 1000 W, vorzugsweise zumindest 2000 W zu übertragen. Unter einem "Induktionsheizelement" soll ein gewickelter elektrischer Leiter verstanden werden, vorzugsweise in Form einer Kreisscheibe, der in zumindest einem Betriebszustand von hochfrequentem Wechselstrom durchflossen ist. Das Induktionsheizelement ist dazu vorgesehen, elektrische Energie in ein magnetisches Wechselfeld umzuwandeln, das dazu vorgesehen ist, in einem metallischen, vorzugsweise zumindest teilweise ferromagnetischen, Heizmittel, insbesondere einem Gargeschirr, Wirbelströme und/oder Ummagnetisierungseffekte hervorzurufen, die in Wärme umgewandelt werden. Das Induktionsheizelement ist dazu vorgesehen, eine Erwärmung des Heizmittels zu verursachen. Das Induktionsheizelement ist dazu vorgesehen, in dem Betriebsmodus elektrische Energie in elektromagnetische Feldenergie zu wandeln, die in einem geeigneten Heizmittel letztendlich in Wärme gewandelt wird. Unter "festgelegt" soll insbesondere bestimmt und/oder definiert und/oder eingestellt verstanden werden. Insbesondere ist durch die Anordnung der Heizelemente zumindest eine Anordnung und/oder Geometrie des variablen Kochflächenbereichs festgelegt. Insbesondere ist durch die Anordnung der Heizelemente zumindest eine Bereichsquererstreckung bindend festgelegt. Vorzugsweise ist durch die Anordnung der Heizelemente zumindest eine Bereichslängserstreckung bindend festgelegt. Unter einer "Längsachse" zumindest eines Elements, insbesondere des Heizelements, soll eine Achse verstanden werden, die zumindest im Wesentlichen parallel zu einer langen Seite eines kleinsten gedachten das Element umschließenden Rechtecks ausgerichtet ist. Unter einem "bezüglich zumindest einer Achse versetzt" angeordneten Element soll insbesondere ein in einer zumindest im Wesentlichen parallel zu der Achse weggerücktes und/oder verschobenes und/oder umgestelltes und/oder an eine differierende Position gesetztes Element verstanden werden. Insbesondere ist bei einer Betrachtung einer Projektion von Mittelpunkten der Heizelemente auf die Längsachse ein Mittelpunkt eines ersten Heizelements der Heizelemente bezüglich eines Mittelpunkts eines zweiten von dem ersten Heizelement getrennt ausgebildeten Heizelements um eine Strecke beabstandet angeordnet. Vorzugsweise weist ein Ende eines ersten Heizelements der Heizelemente zu einem Ende eines zweiten zu dem ersten Heizelement benachbarten, relativ zu dem ersten Heizelement beabstandet angeordneten Heizelements der Heizelemente einen Abstand mit einem Betrag einer Strecke auf. Insbesondere sind die Heizelemente in zumindest einer zumindest im Wesentlichen parallel zu der Heizelementlängserstreckung ausgerichteten Heizelementlängsrichtung versetzt angeordnet. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 0° abweicht. Unter "vorgesehen" soll insbesondere speziell ausgelegt und/oder ausgestattet verstanden werden.

Durch eine erfindungsgemäße Ausgestaltung können vorteilhaft ein hoher Komfort, ein geringer Preis sowie eine preiswerte Ausgestaltung erreicht werden. Durch eine versetzte Anordnung der Heizelemente kann vorteilhaft ein großer Kochflächenbereich erreicht werden, insbesondere in einem Vergleich zu einem Kochflächenbereich mit einer identischen Anzahl an unversetzt angeordneten Heizelementen.

Ferner wird vorgeschlagen, dass die Heizelemente zumindest eine Heizelementlängserstreckung von mehr als 15 cm aufweisen. Insbesondere weisen die Heizelemente eine Heizelementlängserstreckung von mehr als 17 cm, vorzugsweise von mehr als 19 cm und insbesondere von mehr als 21 cm auf. Durch eine derartige Ausgestaltung kann vorteilhaft der variable Kochflächenbereich eine große Bereichsquererstreckung aufweisen, wodurch ein großer variabler Kochflächenbereich erreicht werden kann.

Zudem wird vorgeschlagen, dass die Heizelemente zumindest eine Heizelementquererstreckung von weniger als 15 cm aufweisen. Insbesondere weisen die Heizelemente eine Heizelementquererstreckung von weniger als 13 cm, vorzugsweise von weniger als 11 cm und insbesondere von weniger als 10 cm auf. Durch eine derartige Ausgestaltung können die Heizelemente vorteilhaft flexibel angeordnet werden.

Gemäß der Erfindung sind die Heizelemente um eine Strecke von mehr als 1 cm versetzt angeordnet. Insbesondere sind die Heizelement um eine Strecke von mehr als 1,5 cm, vorzugsweise von mehr als 2 cm, insbesondere von mehr als 2,5 cm und besonders bevorzugt von mehr als 3 cm versetzt angeordnet. Durch eine derartige Ausgestaltung kann vorteilhaft ein für eine gegebene Anzahl an Heizelementen größtmöglicher variabler Kochflächenbereich erreicht werden.

Gemäß der Erfindung sind die Heizelemente um eine Strecke von weniger als 8 cm versetzt angeordnet. Insbesondere sind die Heizelemente um eine Strecke von weniger als 7 cm, vorzugsweise von weniger als 6 cm, insbesondere von weniger als 5 cm und besonders bevorzugt von weniger als 4 cm versetzt angeordnet. Durch eine derartige Ausgestaltung kann vorteilhaft eine Strecke, um welche die Heizelemente versetzt angeordnet sind, begrenzt und damit ein besonders gutes Verhältnis einer Wärmeverteilung bei einem auf dem variablen Kochflächenbereich aufgestellten Gargeschirr relativ zu einer Größe des variablen Kochflächenbereichs erreicht werden.

Zudem wird vorgeschlagen, dass zumindest zwei der Heizelemente eine zumindest im Wesentlichen gleiche Heizelementlängserstreckung aufweisen. Insbesondere weist ein Großteil der, vorzugsweise weisen alle, Heizelemente des variablen Kochflächenbereichs eine zumindest im Wesentlichen gleiche Heizelementlängserstreckung auf. Vorzugsweise weisen zumindest zwei der Heizelemente eine zumindest im Wesentlichen gleiche Heizelementquererstreckung auf. Insbesondere weist ein Großteil der, vorzugsweise weisen alle, Heizelemente des variablen Kochflächenbereichs eine zumindest im Wesentlichen gleiche Heizelementquererstreckung auf. Unter einer "zumindest im Wesentlichen gleichen" Erstreckung zumindest zweier Elemente soll insbesondere eine Erstreckung der Elemente verstanden werden, deren Beträge sich um weniger als 10 %, vorzugsweise um weniger als 5 %, insbesondere um weniger als 2 % und besonders bevorzugt um weniger als 1 % eines Betrags zumindest einer der Erstreckungen unterscheiden. Durch eine derartige Ausgestaltung können vorteilhaft die Heizelemente in einer großen Stückzahl besonders günstig produziert und/oder eingekauft werden.

Weiterhin wird vorgeschlagen, dass zumindest drei der Heizelemente abwechselnd versetzt angeordnet sind. Unter "abwechselnd" soll insbesondere alternierend und/oder gegenseitig und/oder wechselweise und/oder wechselseitig verstanden werden. Insbesondere sind die zumindest drei Heizelemente in einer Folge angeordnet. Vorzugsweise ist ein erstes Heizelement in einer ersten Richtung zu einem dem ersten Heizelement folgend angeordneten zweiten Heizelement versetzt, insbesondere beabstandet, angeordnet. Insbesondere ist das zweite Heizelement in einer zu der ersten Richtung unterschiedlichen zweiten Richtung zu einem dem zweiten Heizelement folgend angeordneten dritten Heizelement versetzt, insbesondere beabstandet, angeordnet. Vorzugsweise sind das erste Heizelement und das dritte Heizelement verschiedene, insbesondere getrennt voneinander ausgebildete, vorzugsweise durch das zweite Heizelement getrennt angeordnete, Heizelemente. Insbesondere sind die erste Richtung und die zweite Richtung einander entgegengerichtet. Insbesondere ist ein erstes der Heizelemente in einer ersten Position angeordnet. Insbesondere ist ein zweites der Heizelemente in einer zweiten Position angeordnet, die gegenüber der ersten Position bezüglich der Längsachse um zumindest eine Strecke versetzt angeordnet ist. Vorzugsweise ist ein drittes der Heizelemente in einer dritten Position angeordnet, die gegenüber der ersten Position bezüglich der Längsachse zumindest im Wesentlichen unversetzt angeordnet ist. Insbesondere ist die dritte Position des dritten Heizelements gegenüber der zweiten Position des zweiten Heizelements um die Strecke versetzt angeordnet. Durch eine derartige Ausgestaltung kann vorteilhaft eine möglichst große variable Kochfläche, insbesondere mit einer guten Wärmeverteilung, erreicht werden.

Ferner wird vorgeschlagen, dass die Heizelemente zumindest eine Reihe ausbilden. Insbesondere bilden die Heizelemente eine einzelne Reihe aus. Unter einer "Reihe" soll insbesondere eine Zeile und/oder eine Spalte und/oder ein Streifen verstanden werden. Insbesondere sind die Heizelemente entlang einer als eine Gerade ausgebildeten Reihenlängsrichtung, die insbesondere zumindest im Wesentlichen senkrecht zu der Längsachse der Heizelemente ausgerichtet ist, aneinander angeordnet, insbesondere aufgereiht. Insbesondere sind die Heizelemente bezüglich einer zumindest im Wesentlichen parallel zu ihrer Längsachse ausgerichteten Seitenkante nebeneinander angeordnet. Unter einer "einzelnen Reihe" aus zumindest zwei Heizelementen soll insbesondere eine Reihe verstanden werden, bei welcher ein erstes Heizelement, das in der Reihenlängsrichtung neben einem zweiten Heizelement angeordnet ist, in einer zumindest im Wesentlichen senkrecht zu der Reihenlängsrichtung ausgerichteten Reihenquerrichtung einen Abstand von mehr als 15 %, vorzugsweise von mehr als 30 %, insbesondere von mehr als 40 % und besonders bevorzugt von mehr als 50 % eines Betrags der Heizelementlängserstreckung und/oder der Heizelementquererstreckung zu einem bezüglich der Reihenquerrichtung nächstgelegenen Heizelement aufweist. Insbesondere ist die Reihenlängsrichtung zumindest im Wesentlichen parallel zu einer Elementquererstreckung ausgerichtet. Vorzugsweise ist die Reihenquerrichtung zumindest im Wesentlichen parallel zu einer Elementlängserstreckung ausgerichtet. Unter zumindest zwei bezüglich zumindest einer Seitenkante "nebeneinander angeordneten" Elementen sollen insbesondere zwei Elemente verstanden werden, die bezüglich einer zumindest im Wesentlichen senkrecht zu der Kante ausgerichteten Richtung in einem Abstand von weniger als 5 %, vorzugsweise von weniger als 3 %, insbesondere von weniger als 2 % und besonders bevorzugt von weniger als 1 % eines Betrags einer Elementlängserstreckung und/oder einer Elementquererstreckung angeordnet sind. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 90° abweicht. Durch eine derartige Ausgestaltung kann vorteilhaft eine große Bereichslängserstreckung erreicht werden.

Zudem wird vorgeschlagen, dass der variable Kochflächenbereich zumindest eine Bereichsquererstreckung von mehr als 21,5 cm aufweist. Insbesondere weist der variable Kochflächenbereich zumindest eine Bereichsquererstreckung von mehr als 22 cm, vorzugsweise von mehr als 23 cm und insbesondere von mehr als 24 cm auf. Vorzugsweise weist der variable Kochflächenbereich zumindest eine Bereichsquererstreckung von weniger als 30 cm, vorzugsweise von weniger als 27 cm und insbesondere von weniger als 25 cm auf. Insbesondere weist der variable Kochflächenbereich zumindest eine Bereichslängserstreckung von mehr als 35 cm, vorzugsweise von mehr als 38 cm und insbesondere von mehr als 40 cm auf. Vorzugsweise weist der variable Kochflächenbereich zumindest eine Bereichslängserstreckung von weniger als 45 cm, vorzugsweise von weniger als 43 cm und insbesondere von weniger als 42 cm auf. Insbesondere weist der variable Kochflächenbereich zumindest eine Bereichsflächenerstreckung von mehr als 22x35 cm, vorzugsweise von mehr als 23x38 cm und insbesondere von mehr als 24x40 cm auf. Vorzugsweise weist der variable Kochflächenbereich zumindest eine Bereichsflächenerstreckung von weniger als 30x45 cm, vorzugsweise von weniger als 27x43 cm und insbesondere von weniger als 25x42 cm auf. Durch eine derartige Ausgestaltung kann vorteilhaft ein breiter variabler Kochflächenbereich mit einem optimalen Verhältnis einer Wärmeverteilung bei einem auf dem variablen Kochflächenbereich aufgestellten Gargeschirr relativ zu einer Größe des variablen Kochflächenbereichs erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Kochfeld mit einer erfindungsgemäßen Kochfeldvorrichtung in einer schematischen Draufsicht,
- Fig. 2: ein weiteres Ausführungsbeispiel eines erfindungsgemäßen Kochfelds mit einer erfindungsgemäßen Kochfeldvorrichtung in einer schematischen Draufsicht und
- Fig. 3: ein weiteres Ausführungsbeispiel eines erfindungsgemäßen Kochfelds mit einer erfindungsgemäßen Kochfeldvorrichtung in einer schematischen Draufsicht.

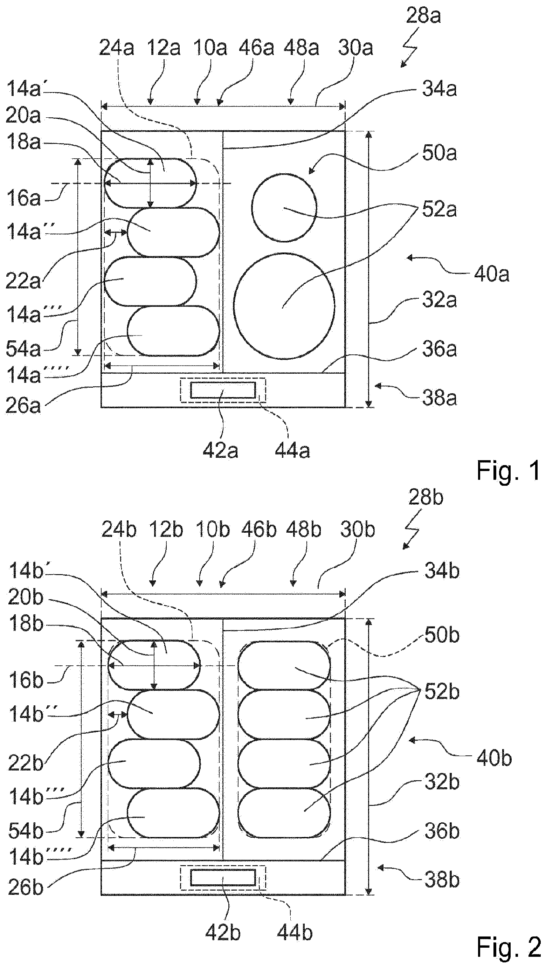

Fig. 1 zeigt ein erfindungsgemäßes, als ein Induktionskochfeld ausgebildetes, Kochfeld 28a mit einer erfindungsgemäßen, als eine Induktionskochfeldvorrichtung ausgebildete, Kochfeldvorrichtung 10a in einer schematischen Draufsicht. Die Kochfeldvorrichtung 10a ist bezüglich einer Kochfeldtiefenerstreckung 32a mittels einer parallel zu einer Kochfeldlängserstreckung 30a ausgerichteten Trennlinie 36a in einen vorderen Bereich 38a und einen hinteren Bereich 40a unterteilt. Der vordere Bereich 38a weist eine wesentlich geringere Flächenerstreckung auf als der hintere Bereich 40a. Die Kochfeldvorrichtung 10a weist eine Bedieneinheit 42a auf, die in dem vorderen Bereich 38a angeordnet ist. Zudem weist die Kochfeldvorrichtung 10a eine Steuereinheit 44a auf, die zu einer Steuerung des hinteren Bereichs 40a der Kochfeldvorrichtung 10a vorgesehen ist. Die Steuereinheit 44a ist dazu vorgesehen, den hinteren Bereich 40a in Abhängigkeit von über die Bedieneinheit 42a an die Steuereinheit 44a übermittelter Befehle zu steuern. Der hintere Bereich 40a ist bezüglich der Kochfeldlängserstreckung 30a mittels einer parallel zu der Kochfeldtiefenerstreckung 32a ausgerichteten Trennlinie 34a mittig in zwei Kochfeldbereiche 46a, 48a unterteilt.

In dem Kochfeldbereich 46a ist ein variabler Kochflächenbereich 12a, der Kochfeldvorrichtung 10a angeordnet. In dem Kochfeldbereich 48a ist ein Kochflächenbereich 50a der Kochfeldvorrichtung 10a angeordnet. Die Kochfeldvorrichtung 10a weist zwei weitere Heizelemente 52a auf, die den Kochflächenbereich 50a ausbilden. Die weiteren Heizelemente 52a weisen bei einer Projektion der weiteren Heizelemente 52a in einer Ebene eine kreisrunde Form auf. Dabei weisen die beiden weiteren Heizelemente 52a einen differierenden Durchmesser auf. Alternativ könnten die weiteren Heizelemente 52a denselben Durchmesser aufweisen. Die weiteren Heizelemente 52a sind in dem Kochfeldbereich 48a angeordnet und als Induktionsheizelemente ausgebildet.

Die Kochfeldvorrichtung 10a umfasst den variablen Kochflächenbereich 12a. Der variable Kochflächenbereich 12a weist eine Bereichsquererstreckung 26a von 24 cm auf. Somit weist der variable Kochflächenbereich 12a die Bereichsquererstreckung 26a von mehr als 21,5 cm auf, wie dies erfindungsgemäß vorgesehen ist. Zudem weist der variable Kochflächenbereich 12a eine Bereichslängserstreckung 54a von 40 cm auf. Damit weist der variable Kochflächenbereich 12a eine Bereichsflächenerstreckung von 24x40 cm auf.

Der variable Kochflächenbereich 12a ist durch eine Anordnung von vier länglichen Heizelementen 14a', 14a", 14a"', 14a"" festgelegt. Erfindungsgemäß weisen die Heizelemente 14a', 14a", 14a"', 14a"" eine Heizelementlängserstreckung 18a von mehr als 15 cm auf. Zudem ist erfindungsgemäß vorgesehen, dass die Heizelemente 14a', 14a", 14a"', 14a"" eine Heizelementquererstreckung 20a von weniger als 15 cm aufweisen. Im vorliegenden Ausführungsbeispiel weist die Heizelementlängserstreckung 18a einen Wert von 21 cm auf. Die Heizelemente 14a', 14a", 14a"', 14a"" weisen die gleiche Heizelementlängserstreckung 18a auf. Die Heizelementquererstreckung 20a weist einen Wert von 10 cm auf.

Die Heizelemente 14a', 14a", 14a"', 14a"" sind als Induktionsheizelemente ausgebildet. Die Heizelemente 14a', 14a", 14a"', 14a"" bilden eine Reihe 24a aus, die parallel zu der Kochfeldtiefenerstreckung 32a ausgerichtet ist. Die Heizelemente 14a', 14a", 14a"', 14a"" sind bezüglich ihrer Längsachse 16a versetzt angeordnet. Hierbei sind zwei bezüglich einer parallel zu der Kochfeldtiefenerstreckung 32a ausgerichteten Tiefenrichtung benachbarte Heizelemente 14a', 14a", 14a"', 14a"" jeweils bezüglich ihrer parallel zu der Kochfeldlängserstreckung 30a ausgerichteten Längsachse 16a versetzt angeordnet. Die Heizelemente 14a', 14a", 14a"', 14a"" sind abwechselnd versetzt angeordnet. Ein erstes Heizelement 14a' der Heizelemente 14a', 14a", 14a"', 14a"" ist in einer ersten Position angeordnet. Ein zweites Heizelement 14a" der Heizelemente 14a', 14a", 14a"', 14a"" ist neben dem ersten Heizelement 14a' angeordnet und bezüglich der Längsachse um eine Strecke 22a versetzt gegenüber dem ersten Heizelement 14a' angeordnet. Ein drittes Heizelement 14a"' ist neben dem zweiten Heizelement 14a" angeordnet und bezüglich der Längsachse um die Strecke 22a versetzt gegenüber dem zweiten Heizelement 14a' angeordnet. Zudem ist das dritte Heizelement 14a"' zu dem ersten Heizelement 14a" bezüglich der Längsachse 16a unversetzt angeordnet. Ein viertes Heizelement 14a"" ist neben dem dritten Heizelement 14a"' angeordnet und bezüglich der Längsachse um die Strecke 22a versetzt gegenüber dem dritten Heizelement 14a"' angeordnet. Weiterhin ist das vierte Heizelement 14a"" zu dem zweiten Heizelement 14a" bezüglich der Längsachse 16a unversetzt angeordnet. Die Strecke 22a, um die die Heizelemente 14a', 14a", 14a"', 14a"" versetzt angeordnet sind, beträgt jeweils 3 cm.

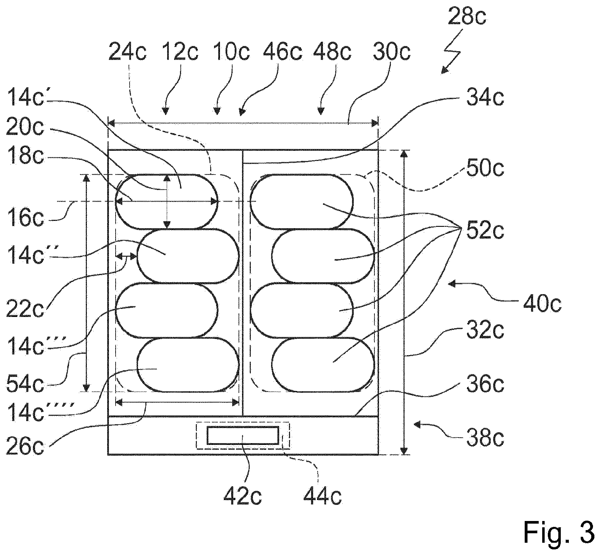

In Fig. 2 und 3 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Fig. 1, verwiesen werden kann. Zur Unterscheidung der Ausführungsbeispiele ist der Buchstabe a in den Bezugszeichen des Ausführungsbeispiels der Fig. 1 durch die Buchstaben b und c in den Bezugszeichen der Ausführungsbeispiele der Fig. 2 und 3 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung der anderen Ausführungsbeispiele, insbesondere der Fig. 1, verwiesen werden.

Fig. 2 zeigt ein weiteres Ausführungsbeispiel eines erfindungsgemäßen Kochfelds 28b mit einer erfindungsgemäßen Kochfeldvorrichtung 10b, die als eine Induktionskochfeldvorrichtung ausgebildet ist, in einer schematischen Draufsicht. Erneut umfasst die Kochfeldvorrichtung 10b einen variablen Kochflächenbereich 12b, der durch eine Anordnung von vier länglichen Heizelementen 14b', 14b", 14b"', 14b"" festgelegt ist. Eine Ausbildung und Anordnung des variablen Kochflächenbereichs 12b sowie der Heizelemente 14b', 14b", 14b"', 14b"" ist analog zu einer Ausbildung und Anordnung korrespondierender Komponenten des Ausführungsbeispiels der Fig. 1, weshalb hierauf im Folgenden nicht weiter eingegangen wird. Das Kochfeld 28b unterscheidet sich von dem Kochfeld 28a des Ausführungsbeispiels der Fig. 1 lediglich durch eine Ausbildung eines Kochfeldbereichs 48b und eines darin angeordneten Kochflächenbereichs 50b. Der Kochflächenbereich 50b umfasst vier weitere Heizelemente 52b, deren Form identisch zu einer Form der Heizelemente 14b', 14b", 14b"', 14b"" ausgebildet ist. Hierbei sind die weiteren Heizelemente 52b als längliche Heizelemente 52b ausgebildet. Die weiteren Heizelemente 52b weisen eine Heizelementlängserstreckung 18b von 21 cm und eine Heizelementquererstreckung 20b von 10 cm auf. Die weiteren Heizelemente 52b sind ebenfalls in einer Reihe angeordnet, wobei die weiteren Heizelemente 52b unversetzt angeordnet sind. Der Kochflächenbereich 50b ist durch die Anordnung der weiteren Heizelemente 52b festgelegt. Der Kochflächenbereich 50b weist eine weitere Bereichslängserstreckung von 21 cm und eine weitere Bereichsquererstreckung von 40 cm auf. Damit umfasst der Kochflächenbereich 50b eine weitere Bereichsflächenerstreckung von 21x40 cm.

Fig. 3 zeigt ein weiteres Ausführungsbeispiel eines erfindungsgemäßen Kochfelds 28c mit einer erfindungsgemäßen Kochfeldvorrichtung 10c, die als eine Induktionskochfeldvorrichtung ausgebildet ist, in einer schematischen Draufsicht. Analog zu den Ausführungsbeispielen der Fig. 1 und Fig. 2 umfasst die Kochfeldvorrichtung 10c einen variablen Kochflächenbereich 12c, der durch eine Anordnung von vier länglichen Heizelementen 14c', 14c", 14c"', 14c"" festgelegt ist. Eine Ausbildung und Anordnung des variablen Kochflächenbereichs 12c sowie der Heizelemente 14c', 14c", 14c"', 14c"" ist analog zu einer Ausbildung und Anordnung korrespondierender Komponenten der Ausführungsbeispiele der Fig. 1 und Fig. 2, weshalb hierauf im Folgenden nicht weiter eingegangen wird. Das Kochfeld 28c unterscheidet sich von den Kochfeldern 28a, 28b der Ausführungsbeispiele der Fig. 1 und Fig. 2 lediglich durch eine Ausbildung eines Kochfeldbereichs 48c und eines darin angeordneten Kochflächenbereichs 50c. Der Kochflächenbereich 50c umfasst vier weitere Heizelemente 52c, deren Form und Anordnung identisch zu einer Form und Anordnung der Heizelemente 14c', 14c", 14c"', 14c"" ausgebildet ist. Somit ist der Kochflächenbereich 50c identisch zu dem variablen Kochflächenbereich 12c ausgebildet, weshalb hierauf nicht weiter eingegangen wird.

Eine Anordnung und Ausrichtung von Kochflächenbereichen der soeben beschriebenen Ausführungsbeispiele der Fig. 1 bis 3 ist flexibel. Beispielsweise könnte ein variabler Kochflächenbereich und ein Kochflächenbereich auf eine jeweils gegenüberliegenden Seite und damit seitenverdreht angeordnet sein. Ebenfalls denkbar ist, dass die Kochflächenbereiche und damit die Kochfeldbereiche parallel zu einer Kochfeldlängserstreckung ausgerichtet sind, anstatt wie in den Ausführungsbeispielen der Fig. 1 bis 3 dargestellt, parallel zu einer Kochfeldtiefenerstreckung.

### Bezugszeichen

- 10: Kochfeldvorrichtung
- 12: Variabler Kochflächenbereich
- 14: Heizelement
- 16: Längsachse
- 18: Heizelementlängserstreckung
- 20: Heizelementquererstreckung
- 22: Strecke
- 24: Reihe
- 26: Bereichsquererstreckung
- 28: Kochfeld
- 30: Kochfeldlängserstreckung
- 32: Kochfeldtiefenerstreckung
- 34: Trennlinie
- 36: Trennlinie
- 38: Vorderer Bereich
- 40: Hinterer Bereich
- 42: Bedieneinheit
- 44: Steuereinheit
- 46: Kochfeldbereich
- 48: Kochfeldbereich
- 50: Kochflächenbereich
- 52: Weiteres Heizelement
- 54: Bereichslängserstreckung

## Patentansprüche

1. Induktionskochfeldvorrichtung mit zumindest einem variablen Kochflächenbereich (12a-c, 50c), der durch eine Anordnung von zumindest zwei länglichen Heizelementen (14a', 14a", 14a‴, 14aʺʺ; 14b', 14b", 14b‴, 14bʺʺ; 14c', 14c", 14c‴, 14cʺʺ, 52c) festgelegt ist, wobei die Heizelemente (14a', 14a", 14a‴, 14aʺʺ; 14b', 14b", 14b‴, 14bʺʺ; 14c', 14c", 14c‴, 14cʺʺ, 52c) als Induktionsheizelemente ausgebildet sind, wobei die Heizelemente (14a', 14a", 14a"', 14aʺʺ; 14b', 14b", 14b"', 14bʺʺ; 14c', 14c", 14c‴, 14cʺʺ, 52c) bezüglich ihrer Längsachse (16a-c) versetzt angeordnet sind, und wobei bei einer Betrachtung einer Projektion von Mittelpunkten der Heizelemente (14a', 14a", 14a"', 14aʺʺ; 14b', 14b", 14b"', 14b""; 14c', 14c", 14c‴, 14cʺʺ, 52c) auf die Längsachse (16a-c) ein Mittelpunkt eines ersten Heizelements (14a', 14a", 14a"', 14aʺʺ; 14b', 14b", 14b‴, 14bʺʺ; 14c', 14c", 14c"', 14c"", 52c) der Heizelemente (14a', 14a", 14a‴, 14a""; 14b', 14b", 14b‴, 14bʺʺ; 14c', 14c", 14c"', 14cʺʺ, 52c) bezüglich eines Mittelpunkts eines zweiten von dem ersten Heizelement (14a', 14a", 14a‴, 14aʺʺ; 14b', 14b", 14b"', 14bʺʺ, 14c', 14c", 14c‴, 14cʺʺ, 52c) getrennt ausgebildeten Heizelements (14a', 14a", 14a‴, 14aʺʺ; 14b', 14b", 14b‴, 14bʺʺ; 14c', 14c", 14c‴, 14cʺʺ, 52c) um eine Strecke beabstandet angeordnet ist, wobei die Heizelemente (14a', 14a", 14a‴, 14aʺʺ; 14b', 14b", 14b‴, 14b""; 14c', 14c", 14c"', 14cʺʺ, 52c) um eine Strecke (22a-c) von mehr als 1 cm versetzt angeordnet sind, und **dadurch gekennzeichnet, dass** die Heizelemente (14a', 14a", 14a‴, 14a""; 14b', 14b", 14b"', 14bʺʺ; 14c', 14c", 14c‴, 14cʺʺ, 52c) um eine Strecke (22a-c) von weniger als 8 cm versetzt angeordnet sind, wobei eine Außenkontur der Heizelemente (14a', 14a", 14a"', 14aʺʺ; 14b', 14b", 14b‴, 14bʺʺ; 14c', 14c", 14c‴, 14cʺʺ, 52c) nicht eine angenäherte Trapezform aufweist, welche zwei gegenüberliegende und in etwa gleich lange Seiten und dazwischen zwei kurze Seiten, die jedoch unterschiedlich lang sind für die Trapezform, aufweist.

2. Induktionskochfeldvorrichtung nach Anspruch 1, **dadurch gekennzeichnet, dass** die Heizelemente (14a', 14a", 14a"', 14aʺʺ; 14b', 14b", 14b‴, 14b""; 14c', 14c", 14c‴, 14cʺʺ, 52c) zumindest eine Heizelementlängserstreckung (18a-c) von mehr als 15 cm aufweisen.

3. Induktionskochfeldvorrichtung nach einem der vorhergehenden Ansprüche, **dadurch gekennzeichnet, dass** die Heizelemente (14a', 14a", 14a"', 14aʺʺ; 14b', 14b", 14b"', 14bʺʺ; 14c', 14c", 14c"', 14cʺʺ, 52c) zumindest eine Heizelementquererstreckung (20a-c) von weniger als 15 cm aufweisen.

4. Induktionskochfeldvorrichtung nach einem der vorhergehenden Ansprüche, **dadurch gekennzeichnet, dass** zumindest zwei der Heizelemente (14a', 14a", 14a‴, 14aʺʺ; 14b', 14b", 14b‴, 14bʺʺ; 14c', 14c", 14c‴, 14cʺʺ, 52c) eine zumindest im Wesentlichen gleiche Heizelementlängserstreckung (18a-c) aufweisen.

5. Induktionskochfeldvorrichtung nach einem der vorhergehenden Ansprüche, **dadurch gekennzeichnet, dass** zumindest drei der Heizelemente (14a', 14a", 14a‴, 14aʺʺ; 14b', 14b", 14b‴, 14bʺʺ; 14c', 14c", 14c"', 14cʺʺ, 52c) abwechselnd versetzt angeordnet sind.

6. Induktionskochfeldvorrichtung nach einem der vorhergehenden Ansprüche, **dadurch gekennzeichnet, dass** die Heizelemente (14a', 14a", 14a"', 14aʺʺ; 14b', 14b", 14b"', 14bʺʺ; 14c', 14c", 14c‴, 14cʺʺ, 52c) eine Reihe (24a-c) ausbilden.

7. Induktionskochfeldvorrichtung nach einem der vorhergehenden Ansprüche, **dadurch gekennzeichnet, dass** der variable Kochflächenbereich (12a-c, 50c) zumindest eine Bereichsquererstreckung (26a-c) von mehr als 21,5 cm aufweist.

8. Kochfeld mit zumindest einer Induktionskochfeldvorrichtung nach einem der Ansprüche 1 bis 7.

## Claims

1. Induction hotplate device having at least one variable cooktop region (12a-c, 50c) formed by an arrangement of at least two elongated heating elements (14a', 12a", 14a‴, 14aʺʺ; 14b', 14b", 14b‴, 14bʺʺ, 14c', 14c", 14c‴, 14cʺʺ, 52c), wherein the heating elements (14a', 12a", 14a"', 14aʺʺ; 14b', 14b", 14b‴, 14bʺʺ, 14c', 14c", 14c‴, 14cʺʺ, 52c) are designed as induction heating elements, wherein the heating elements (14a', 12a", 14a"', 14aʺʺ; 14b', 14b", 14b‴, 14bʺʺ, 14c', 14c", 14c‴, 14cʺʺ, 52c) are arranged offset with respect to their longitudinal axis (16a-c), and wherein when looking at a projection of centre points of the heating elements (14a', 12a", 14a‴, 14aʺʺ; 14b', 14b", 14b‴, 14bʺʺ, 14c', 14c", 14c‴, 14cʺʺ, 52c) onto the longitudinal axis (16a-c) a centre point of a first heating element (14a', 12a", 14a"', 14aʺʺ; 14b', 14b", 14b‴, 14bʺʺ, 14c', 14c", 14c‴, 14cʺʺ, 52c) of the heating elements (14a', 12a", 14a"', 14aʺʺ; 14b', 14b", 14b‴, 14bʺʺ, 14c', 14c", 14c‴, 14cʺʺ, 52c) is arranged spaced apart by a distance in respect of a centre point of a second heating element (14a', 12a", 14a"', 14aʺʺ; 14b', 14b", 14b‴, 14bʺʺ, 14c', 14c", 14c‴, 14cʺʺ, 52c) formed separately from the first heating element (14a', 12a", 14a‴, 14aʺʺ; 14b', 14b", 14b‴, 14bʺʺ, 14c', 14c", 14c‴, 14cʺʺ, 52c), wherein the heating elements (14a', 12a", 14a"', 14aʺʺ; 14b', 14b", 14b‴, 14bʺʺ, 14c', 14c", 14c‴, 14cʺʺ, 52c) are arranged offset by a distance (22a-c) of more than 1 cm, and **characterised in that** the heating elements (14a', 12a", 14a‴, 14aʺʺ; 14b', 14b", 14b‴, 14bʺʺ; 14c', 14c", 14c‴, 14cʺʺ, 52c) are arranged offset by a distance (22a-c) of less than 8 cm, wherein an outer contour of the heating elements (14a', 12a", 14a"', 14aʺʺ; 14b', 14b", 14b‴, 14bʺʺ, 14c', 14c", 14c‴, 14cʺʺ, 52c) does not have an approximated trapezium shape, which has two opposing sides of approximately equal length, and two short sides therebetween which are, however, of different lengths for the trapezium shape.

2. Induction hotplate device according to claim 1, **characterised in that** the heating elements (14a', 12a", 14a"', 14aʺʺ; 14b', 14b", 14b‴, 14bʺʺ, 14c', 14c", 14c‴, 14cʺʺ, 52c) have at least one heating element longitudinal extension (18a-c) of more than 15 cm.

3. Induction hotplate device according to one of the preceding claims, **characterised in that** the heating elements (14a', 12a", 14a"', 14aʺʺ; 14b', 14b", 14b‴, 14bʺʺ, 14c', 14c", 14c‴, 14cʺʺ, 52c) have at least one heating element transverse extension (20a-c) of less than 15 cm.

4. Induction hotplate device according to one of the preceding claims, **characterised in that** at least two of the heating elements (14a', 12a", 14a‴, 14aʺʺ; 14b', 14b", 14b‴, 14bʺʺ; 14c', 14c", 14c"', 14cʺʺ, 52c) have an at least substantially identical heating element longitudinal extension (18a-c).

5. Induction hotplate device according to one of the preceding claims, **characterised in that** at least three of the heating elements (14a', 12a", 14a‴, 14aʺʺ; 14b', 14b", 14b"', 14bʺʺ, 14c', 14c", 14c‴, 14cʺʺ, 52c) are arranged alternately offset.

6. Induction hotplate device according to one of the preceding claims, **characterised in that** the heating elements (14a', 12a", 14a"', 14aʺʺ; 14b', 14b", 14b‴, 14bʺʺ, 14c', 14c", 14c‴, 14cʺʺ, 52c) form a row (24a-c).

7. Induction hotplate device according to one of the preceding claims, **characterised in that** the variable cooktop region (12a-c, 50c) has at least one area transverse extension (25a-c) of more than 21.5 cm.

8. Hotplate having at least one induction hotplate device according to one of claims 1 to 7.

## Revendications

1. Dispositif pour table de cuisson à induction, , avec au moins une zone de plaque de cuisson variable (12a-c, 50c), laquelle est fixée par un agencement d'au moins deux éléments chauffants (14a', 14a", 14a‴, 14a""; 14b', 14b"14b"', 14b""; 14c', 14c", 14c"', 14c"", 52c) longitudinaux, ces éléments chauffants (14a', 14a", 14a"', 14a""; 14b', 14b", 14b"', 14b""; 14c', 14c", 14c"', 14c"", 52c), étant agencés de manière décalée par rapport à leur axe longitudinal (16a-c); et, vu sous angle d'une projection de points centraux des éléments chauffants (14a', 14a", 14a‴, 14a""; 14b', 14b", 14bʺʺ, 14b""; 14c', 14c", 14c‴, 14c"", 52c) sur l'axe longitudinal (16a-c), un point central d'un premier élément chauffant (14a', 14a", 14a"', 14a""; 14b', 14b", 14b"', 14b""; 14c', 14c", 14c"', 14c"", 52c) des éléments chauffants (14a', 14a", 14a‴, 14a""; 14b', 14b", 14b"', 14b""; 14c', 14c", 14c‴, 14c"", 52c), étant agencé écarté d'une longueur par rapport à un point central d'un deuxième élément chauffant (14a', 14a", 14a"', 14a""; 14b', 14b", 14b"', 14b""; 14c', 14c", 14c"', 14c"", 52c) du premier élément chauffant (14a', 14a", 14a"', 14a""; 14b', 14b", 14b"', 14b""; 14c', 14c", 14c‴, 14c"", 52c), ces éléments chauffants (14a', 14a", 14a‴, 14a""; 14b', 14b", 14b‴, 14b""; 14c', 14c", 14c"', 14c"", 52c) étant agencés de manière décalée sur une longueur (22a-c) de plus d'1 cm, et **caractérisé en ce que**
ces éléments chauffants (14a', 14a", 14a"', 14a""; 14b', 14b", 14b"', 14b""; 14c', 14c", 14c"', 14c"", 52c) sont agencés de manière décalée sur une longueur (22a-c) de moins de 8 cm, dans lequel un contour extérieur des éléments chauffants (14a', 14a", 14a"', 14a""; 14b', 14b", 14b"', 14b""; 14c', 14c", 14c"', 14c"", 52c) ne présente pas une forme trapézoïdale approximative, laquelle comprend deux côtés opposés et à peu près de même longueur, et entre eux, deux côtés courts mais de longueur différents pour la forme trapézoïdale.

2. Dispositif pour table de cuisson à induction selon la revendication 1, **caractérisé en ce que** les éléments chauffants (14a', 14a", 14a‴, 14a""; 14b', 14b", 14b"', 14b""; 14c', 14c", 14c"', 14c"", 52c) comportent au moins un allongement longitudinal des éléments chauffants (18a-c) de plus de 15 cm.

3. Dispositif pour table de cuisson à induction selon l'une des revendications précédentes, **caractérisé en ce que** les éléments chauffants (14a', 14a", 14a"', 14a""; 14b', 14b", 14b"', 14b""; 14c', 14c", 14c‴, 14c"", 52c) comportent au moins un allongement latéral des éléments chauffants (20a-c) de moins de 15 cm.

4. Dispositif pour table de cuisson à induction selon l'une des revendications précédentes, **caractérisé en ce qu'**au moins deux des éléments chauffants (14a', 14a", 14a"', 14a""; 14b', 14b", 14b"', 14b""; 14c', 14c", 14c‴, 14c"", 52c) comportent au moins un allongement longitudinal des éléments chauffants (18a-c) au moins essentiellement égal.

5. Dispositif pour table de cuisson à induction selon l'une des revendications précédentes, **caractérisé en ce qu'**au moins trois des éléments chauffants (14a', 14a", 14a"', 14a""; 14b', 14b", 14b"', 14b""; 14c', 14c", 14c"', 14c"", 52c) sont agencés de manière décalée en alternance.

6. Dispositif pour table de cuisson à induction selon l'une des revendications précédentes, **caractérisé en ce que** les éléments chauffants (14a', 14a", 14a"', 14a""; 14b', 14b", 14b"', 14b""; 14c', 14c", 14c‴, 14c"", 52c) forment une rangée (24a-c).

7. Dispositif pour table de cuisson à induction selon l'une des revendications précédentes, **caractérisé en ce que** la zone de plaque de cuisson (12a-c, 50c) variable présente au moins un allongement latéral de zone (26a-c) de plus de 21,5 cm.

8. Table de cuisson avec au moins un dispositif pour table de cuisson à induction selon l'une des revendications 1 à 7.
